# FASCICULE DE BREVET EUROPEEN

(11) **EP 0 977 626 B1**
(45) Date de publication et mention de la délivrance du brevet: **23.10.2002**
(21) Numéro de dépôt: 98921573.6
(22) Date de dépôt: 21.04.1998
(51) Int. Cl.: B01F 17/00

(54) **COMPOSITION A BASE D'ALKYLPOLYGLYCOSIDES ET D'ALCOOLS GRAS, ET SES UTILISATIONS**
ZUSAMMENSETZUNG AUS ALKYLPOLYGLYKOSIDEN UND FETTALKOHOLEN UND IHRE VERWENDUNG
COMPOSITION BASED ON ALKYLPOLYGLYCOSIDES AND FATTY ALCOHOLS, AND USES THEREOF

(30) Priorité: 21.04.1997 FR 9704876
(43) Date de publication de la demande: 09.02.2000
(73) Titulaire: SOCIETE D'EXPLOITATION DE PRODUITS POUR LES INDUSTRIES CHIMIQUES, S.E.P.P.I.C., 75321 Paris Cédex 07 (FR)
(72) Inventeur: AMALRIC, Chantal, F-81700 Blan (FR); BOITEUX, Jean-Pierre, F-81710 Saix (FR); MILIUS, Alain, F-06000 Nice (FR); MICHEL, Nelly, F-94700 Maisons Alfort (FR)
(74) Mandataire: Hubert, Philippe
(86) Numéro de dépôt international: FR9800796
(87) Numéro de publication internationale: WO98047610

(56) Documents cités:
- WO-A-92/06778

## Description

La présente invention concerne une nouvelle famille de compositions à base d'alkylpolyglycosides et d'alcools gras, ainsi que l'utilisation de ces compositions pour la préparation d'émulsions.

Les alkylglycosides ou alkylpolyglycosides (APG) sont des composés tensioactifs non ioniques bien connus qui peuvent être utilisés seuls, ou en association avec d'autres tensioactifs, dans une large gamme d'applications industrielles et notamment dans le domaine cosmétique.

Les alkylpolyglycosides ont d'abord été utilisés comme agents moussants et dans cette application, ceux dont la chaîne alkyle comporte de 8 à 14 atomes de carbone se sont avérés particulièrement intéressants.

Plus récemment, les alkylpolyglycosides ont été utilisés comme émulsionnants, et dans cette application, ceux dont la chaîne alkyle comporte de 16 à 18 atomes de carbone se sont avérés particulièrement intéressants.

La demande de brevet WO 92/06778, au nom de la demanderesse, décrit pour la première fois l'utilisation de mélanges d'alkylpolyglycosides et d'alcools gras en tant qu'agents auto-émulsionnants.

Plus précisément, les mélanges décrits dans ce document antérieur comprennent :
- de 60 à 90 % en poids d'au moins un alcool gras ayant de 12 à 22 atomes de carbone, et de préférence de 16 à 18 atomes de carbone ; et
- de 10 à 40 % en poids d'un alkylpolyglycoside, dont la partie alkyle est de préférence identique à celle de l'alcool gras.

Ce document décrit à l'exemple 2 l'utilisation d'une composition auto-émulsionnable essentiellement constituée d'alkylpolyglycosides et d'alcools ayant 16 et 18 atomes.

Les compositions auto-émulsionnables décrites dans la demande précitée sont commercialisées sous la dénomination Montanov® 68 et comportent un mélange d'alkylpolyglycosides dont les chaînes grasses comprennent 16 et 18 atomes de carbone, ainsi qu'un mélange d'alcools gras de même longueur de chaînes grasses.

Par ailleurs, la demande de brevet WO 95/13863, au nom de la demanderesse, décrit des compositions également à base d'alkylpolyglycosides et d'alcools gras, se présentant sous forme de concentrés, notamment utiles pour la préparation d'émulsions fluides.

Ces compositions sont essentiellement caractérisées par le fait qu'elles comprennent un mélange d'au moins deux alkylpolyglycosides se différenciant par la nature de leur partie alkyle.

Il est précisé que l'un au moins de ces alkylpolyglycosides comporte une chaîne alkyle ayant de 16 à 22 atomes de carbone, et de préférence de 16 à 18 atomes de carbone.

Il est en outre précisé que les alkylpolyglycosides comportant une chaîne alkyle ayant de 16 à 22 atomes de carbone doivent représenter 25 % au moins du mélange d'alkylpolyglycosides, et dans tous les exemples, ces alkylpolyglycosides comportent 16 ou 18 atomes de carbone et représentent au moins 50 % en poids du mélange d'alkylpolyglycosides.

Par ailleurs, la demande de brevet WO 96/37285, au nom de la demanderesse, décrit également des compositions à base d'alkylpolyglycosides et d'alcools gras, notamment utiles pour l'obtention d'émulsions stables à des températures basses, par exemple inférieures à -20°C.

Ces compositions sont essentiellement caractérisées par le fait qu'elles comprennent un mélange d'au moins trois alkylpolyglycosides se différenciant par la nature de leur partie alkyle.

Ce mélange ne comporte uniquement que des alkylpolyglycosides ayant 12, 14, 16 ou 18 atomes de carbone. En outre, les alkylpolyglycosides ayant 16 et 18 atomes de carbone sont obligatoirement présents au sein de ce mélange en une quantité supérieure à 15 % en poids, rapportée au poids total du mélange d'alkylpolyglycosides, et dans les exemples 1 et 2 de ce document les alkylpolyglycosides ayant 16 et 18 atomes de carbone représentent respectivement 63 et 45 % en poids du mélange d'alkylpolyglycosides.

Ainsi, les compositions à base d'alkylpolyglycosides et d'alcools gras ayant été utilisées jusqu'à présent dans l'état de la technique pour la préparation d'émulsions sont essentiellement caractérisées par la présence, au sein du mélange d'alkylpolyglycosides, d'une proportion relativement importante, et généralement supérieure à environ 50 % en poids, d'alkylpolyglycosides dont la partie alkyle présente de 16 à 18 atomes de carbone.

Si de telles compositions sont parfaitement satisfaisantes notamment au niveau de la stabilité des émulsions qu'elles permettent d'obtenir, il a été observé que ces émulsions n'étaient pas entièrement satisfaisantes du point de vue de leur texture et en particulier vis-à-vis de critères d'évaluation sensorielle tels que la facilité d'étalement, l'évanescence, l'absorption par la peau et la présence de résidus après étalement.

Dans ces conditions, la présente invention a pour but de résoudre le problème technique consistant en la fourniture de nouvelles compositions permettant la préparation d'émulsions dont les propriétés de texture sont significativement améliorées par rapport à celles des émulsions obtenues à partir des compositions décrites dans l'état de la technique dont le contenu a été rappelé précédemment.

La solution conforme à la présente invention pour résoudre ce problème technique consiste en de nouvelles compositions à base d'alkylpolyglycosides et d'alcools gras, caractérisées en ce qu'elles comprennent :
* 5 à 60 % en poids d'un mélange d'alkylpolyglycosides essentiellement constitué de :
   - 0 à 15 % en poids d'au moins un alkylpolyglycoside de formule (I) :

      R₁O(G₁)_{x₁} (I)

      dans laquelle R₁ est un radical aliphatique, linéaire ou ramifié, ayant 16 ou 18 atomes de carbone, G₁ est un reste d'un saccharide, et x₁ est compris entre 1 et 5;
   - 0 à 100 % en poids d'un alkylpolyglycoside de formule (II):

      R₂O(G₂)_{x₂} (II)

      dans laquelle R₂ est un radical aliphatique, linéaire ou ramifié, ayant 14 atomes de carbone, G₂ est le reste d'un saccharide, x₂ est compris entre 1 et 5 ;
   - 0 à 100 % en poids d'au moins un alkylpolyglycoside de formule (III) :

      R₃O(G₃)_{x₃} (III)

      dans laquelle R₃ est un radical aliphatique, linéaire ou ramifié, ayant 20 ou 22 atomes de carbone, G₃ est le reste d'un saccharide, x₃ est compris entre 1 et 5 ; et
* 95 à 40 % en poids d'un ou plusieurs alcools de formule R'OH, dans laquelle R' est un radical aliphatique, linéaire ou ramifié, ayant de 14 à 22 atomes de carbone, et de préférence d'un mélange constitué des alcools dont la partie alkyle est identique à la partie alkyle R₁, R₂ et R₃ des alkylpolyglycosides précités.

Avantageusement, le mélange précité d'alcools est essentiellement constitué de :
- 0 à 20 % en poids d'au moins un alcool ayant 16 à 18 atomes de carbone ;
- 0 à 100 % en poids d'au moins un alcool ayant 14 atomes de carbone ;
- 0 à 100 % en poids d'au moins un alcool ayant 20 à 22 atomes de carbone.

De telles compositions à base d'aikylpolyglycosides et d'alcools gras se différencient donc essentiellement des compositions de l'état de la technique par leur teneur relativement limitée en alkylpolyglycosides dont la partie alkyle comporte 16 ou 18 atomes de carbone.

Il a été découvert, de façon tout à fait surprenante et inattendue, que de telles compositions permettent d'obtenir des émulsions présentant des propriétés de texture remarquables, particulièrement intéressantes, pour leurs utilisations dans le domaine cosmétique.

Une première sous-famille préférée de compositions à base d'alkylpolyglycosides et d'alcools gras susceptibles d'être utilisées dans le cadre de la présente invention est constituée des compositions dont le mélange précité d'alkylpolyglycosides est essentiellement constitué de :
- 0 à 20 %, et de préférence 0 à 15 % en poids d'au moins un alkylpolyglycoside de formule (I) tel que défini précédemment ;
- 0 à 40 % en poids d'un alkylpolyglycoside de formule (II) tel que défini précédemment ; et
- 50 à 100 % en poids d'au moins un alkylpolyglycoside de formule (III) tel que défini précédemment.

Une deuxième sous-famille préférée de compositions à base d'alkylpolyglycosides et d'alcools gras susceptibles d'être utilisées avantageusement dans le cadre de la présente invention est constituée des compositions dont le mélange précité d'alkylpolyglycosides est essentiellement constitué de :
- 0 à 20 %, et de préférence 0 à 15 % en poids, d'au moins un alkylpolyglycoside de formule (I) tel que défini précédemment ;
- 70 à 100 %, et de préférence 90 à 100 % en poids d'un alkylpolyglycoside de formule (II) tel que défini précédemment ; et
- 0 à 30 %, et de préférence 0 à 10 % en poids d'au moins un alkylpolyglycoside de formule (III) tel que défini précédemment.

Les compositions particulièrement préférées dans le cadre de la présente invention sont les compositions comprenant :
soit :
   * 8 à 40 % en poids, et de préférence 8 à 30 % en poids du mélange précité d'alkylpolyglycosides ; et
   * 92 à 60 % en poids et de préférence 92 à 70 % en poids d'un ou plusieurs alcools précités ;
soit :
   * 10 à 30 % en poids, et de préférence 25 % en poids, d'un alkylpolyglycoside de formule (II); et
   * 90 à 70 % en poids d'un alcool ayant 14 atomes de carbone ;
soit :
   * 8 à 25 % en poids, et de préférence 8 à 18 % en poids, d'un mélange d'alkylpolyglycosides essentiellement constitués de :
      - 0 à 15 % en poids d'au moins un alkylpolyglycoside de formule (I) telle que définie précédemment,
      - 0 à 25 % en poids d'un alkylpolyglycoside de formule (II) telle que définie à la revendication 1,
      - 75 à 100% en poids d'au moins un alkylpolyglycoside de formule (III) telle que définie précédemment,
   * 92 à 75 % en poids, et de préférence 92 à 85 % en poids d'un mélange constitué des alcools dont la partie alkyle est identique à la partie alkyle R₁, R₂ et R₃ des alkylpolyglycosides précités ;
soit :
   * 10 à 20 % en poids d'un mélange d'alkylpolyglycosides essentiellement constitués de :
      - 20 à 40 % en poids, et de préférence environ 30 % en poids d'un alkylpolyglycoside de formule (II) telle que définie précédemment,
      - 60 à 80 % en poids, et de préférence environ 70 % en poids d'au moins un alkylpolyglycoside de formule (III) telle que définie précédemment, de préférence un alkyLpolyglycoside ayant 20 atomes de carbone,
   * 80 à 90 % en poids d'un mélange constitué des alcools dont la partie alkyle est identique à la partie alkyle R₂ et R₃ des alkylpolyglycosides précités.

Les alkylpolyglycosides de formules (I), (II) et (III) précités peuvent comporter, à titre de reste de saccharide représenté respectivement par G₁, G₂ et G₃, un reste de glucose ou dextrose, saccharose, fructose, galactose, maltose, maltotriose, lactose, cellobiose, mannose, ribose, dextrane, talose, allose, xylose, levoglucosane, cellulose ou amidon.

Avantageusement, G₁, G₂ et G₃ représentent chacun un reste de glucose.

Il est en outre à noter que chaque unité de la partie polyoside de l'alkylpolyglycoside peut être sous forme anomérique α ou β, sous forme L ou D, et la configuration du reste de saccharide peut être de type furanoside ou pyranoside.

Les indices x₁, x₂ et x₃ représentent le degré de polymérisation moyen du reste de saccharide. De préférence, ces indices représenteront un nombre compris entre 1,05 et 2,5, de préférence encore entre 1,1 et 2.

L'expression "alkylpolyglycoside" utilisée dans le cadre de la présente demande désigne donc indifféremment les alkylmonoosides (degré de polymérisation égal à 1) ou les alkylpolyglycosides (degré de polymérisation supérieur à 1).

Les alkylpolyglycosides de formules (I), (II) et (III) sont des composés dont les radicaux alkyles comportent des chaînes de longueur déterminée. Ces composés peuvent toutefois contenir, en outre, des proportions mineures de composés de même nature dont les radicaux alkyles comportent une chaîne plus longue et/ou plus courte, de tels composés provenant notamment des alcools gras généralement d'origine naturelle ou synthétique utilisés comme matière de départ pour la synthèse de ces alkylpolyglycosides.

L'expression "essentiellement constitué" utilisée dans le cadre de la présente demande et des revendications pour caractériser le mélange d'alkylpolyglycosides précité doit donc s'entendre comme n'excluant pas la présence, au sein du mélange d'alkylpolyglycosides, de composés dont radicaux alkyles ont 10, 12 ou 24 atomes de carbone, en une quantité cumulée maximale de 10 % en poids, et de préférence de 5 % en poids rapportée au poids total du mélange d'alkylpolyglycosides.

Les compositions à base d'alkylpolyglycosides et d'alcools gras conformes à la présente invention peuvent être préparées par simple mélange de leurs constituants en des proportions prédéterminées souhaitées.

A l'échelle industrielle, on les préparera de préférence selon l'une des deux voies classiquement utilisées pour la synthèse des alkylpolyglycosides, et par exemple par réaction, en milieu acide, entre un alcool gras et un saccharide disposant d'un OH anomérique, tel que le glucose ou le dextrose.

De telles voies de synthèse sont bien connues et ont été décrites dans de nombreux documents et en particulier dans les documents de la demanderesse rappelés précédemment.

Le cas échéant, cette synthèse pourra être complétée par des opérations de neutralisation, de filtration, de distillation partielle de l'alcool gras en excès ou de décoloration.

Les compositions à base alkylpolyglycosides et d'alcools gras conformes à la présente invention peuvent être utilisées, à titre d'émulsionnant principal, pour la préparation d'émulsions variées.

Ainsi, selon un deuxième aspect, la présente demande vise à couvrir des émulsions comprenant au moins une phase aqueuse et une phase huileuse et, à titre d'émulsionnant principal, une composition à base d'alkylpolyglycosides et d'alcools gras telle que définie précédemment.

D'une façon générale, une telle émulsion comprendra de 1 à 25 % en poids, et de préférence de 1 à 10 % en poids de la composition émulsionnante précitée.

La phase huileuse constitutive de l'émulsion peut être constituée par le ou les alcools gras constitutifs de la composition émulsionnante de l'invention, sans qu'il ne soit nécessaire de mettre en oeuvre une autre huile. Mais plus généralement, on utilisera une huile choisie parmi les huiles suivantes :
- les huiles d'origine végétale, telles que l'huile d'amandes douces, l'huile de coprah, l'huile de ricin, l'huile de jojoba, l'huile d'olive, l'huile de colza, l'huile d'arachide, l'huile de tournesol, l'huile de germes de blé, l'huile de germes de maïs, l'huile de soja, l'huile de coton, l'huile de luzerne, l'huile de pavot, l'huile de potiron, l'huile d'onagre, l'huile de millet, l'huile d'orge, l'huile de seigle, l'huile de carthame, l'huile de bancoulier, l'huile de passiflore, l'huile de noisette, l'huile de palme, le beurre de karité, l'huile de noyau d'abricot, l'huile de calophyllum, l'huile de sysymbrium, l'huile d'avocat ;
- les huiles végétales modifiées telles que les produits connus sous les dénominations INCI, Apricot Kernel Oil PEG-6 esters et Olive Oil PEG-6 esters ;
- les huiles d'origine naturelle, telles que le perhydrosqualène, le squalène ;
- les huiles minérales, telles que l'huile de paraffine ou huile de vaseline, et les huiles minérales, notamment issues de coupes pétrolières, telles que les isoparaffines, ayant un point d'ébullition compris entre 300 et 400°C ;
- les huiles synthétiques, notamment les esters d'acides gras tels que le myristate de butyle, le myristate de propyle, le myristate de cétyle, le palmitate d'isopropyle, le stéarate de butyle, le stéarate d'hexadécyle, le stéarate d'isopropyle, le stéarate d'octyle, le stéarate d'isocétyle, l'oléate dodécyle, le laurate d'hexyle, le dicaprylate de propylèneglycol, les esters dérivés d'acide lanolique, tels que le lanolate d'isopropyle, le lanolate d'isocétyle, les triglycérides comme le triheptanoate de glycérol, les alkylbenzoates, les isoparaffines, les poly-alphaoléfines, les polyoléfines, les isoalcanes de synthèse comme l'isohexadecane, l'isododécane et les huiles de silicone. Parmi ces dernières, on peut plus particulièrement citer les diméthylpolysiloxanes, méthylphénylpolysiloxanes, les silicones modifiés par des amines, les silicones modifiés par des acides gras, les silicones modifiés par des alcools, les silicones modifiés par des alcools et des acides gras, des silicones modifiés par-des groupements polyéther, des silicones époxy modifiés, des silicones modifiés par des groupements fluorés, des silicones cycliques et des silicones modifiés par des groupements alkyles.

D'une façon générale, les émulsions conformes à la présente invention comprendront jusqu'à 50% en poids de phase huileuse telle que définie précédemment.

Ces émulsions peuvent être préparées par simple dispersion d'une phase grasse constituée de la composition émulsionnante précitée et éventuellement d'une ou plusieurs huiles telles que décrites ci-dessus, dans une phase hydrophile, généralement de l'eau ou un solvant hydrophile.

La dispersion peut être réalisée à chaud ou à froid en fonction du point de fusion de la composition émulsionnante, tous les constituants devant être liquides au moment du mélange.

Les émulsions ainsi obtenues se différencient de celles susceptibles d'être obtenues à partir des compositions émulsionnantes de l'état de la technique, par le fait qu'elles présentent des propriétés de texture et des caractéristiques sensorielles remarquables, comme il sera démontré plus loin.

Ces émulsions peuvent, en outre, comprendre un agent émulsionnant complémentaire en une quantité telle que la quantité totale d'agents émulsionnants au sein de l'émulsion soit inférieure ou égale à 25 % en poids.

Il a en effet été constaté, d'une façon surprenante, que les compositions émulsionnantes à base d'alkylpolyglycosides et d'alcools gras conformes à la présente invention potentialisent les propriétés émulsionnantes d'un certain nombre d'émulsionnants traditionnels, et en particulier de nature non ionique ou anionique, tout en conférant aux émulsions obtenues à partir de ces mélanges d'émulsionnants, des propriétés de texture et des caractéristiques sensorielles remarquables.

Un agent émulsionnant complémentaire non ionique peut être par exemple un alcool éthoxylé, un acide gras éthoxylé, un ester de glycérol, un ester de glycérol éthoxylé, un ester de sorbitan, un polysorbate, un ester de polyglycérol, un ester de saccharose, un ester d'alkylglucose, un ester d'alkylglucose éthoxylé, une diméthicone copolyol.

Un agent émulsionnant anionique complémentaire peut être, par exemple, un alkyl sulfate, un alkyl phosphate, un alcool éthoxylé phosphaté, un alcool éthoxylé sulfaté, un savon d'acide gras, un acylat, une diméthicone copolyol phosphate.

Les compositions émulsionnantes à base d'alkylpolyglycosides et d'alcools gras conformes à la présente invention peuvent également être utilisées pour la préparation d'émulsions fluides. Dans ce cas, on utilisera un émulsionnant complémentaire ou co-émulsionnant particulier choisi parmi les huiles végétales éthoxylées et les esters méthyliques d'huile végétale éthoxylés.

D'une façon générale, la quantité totale d'agents émulsionnants au sein de l'émulsion sera inférieure ou égale à 25 % en poids, et le rapport pondéral entre l'émulsionnant principal constitué du mélange d'alkylpolyglycosides et d'alcools gras et le co-émulsionnant sera compris entre 98:2 et 20:80.

Il a en effet été découvert, de façon tout à fait inattendue, qu'à la différence des compositions à base d'alkylpolyglycosides et d'alcools gras de l'état de la technique, ces nouvelles compositions émulsionnantes de l'invention, lorsqu'elles sont associées à un émulsionnant secondaire choisi parmi les huiles végétales éthoxylées et les esters méthyliques d'huile végétale éthoxylés, permettent la formulation d'émulsions fluides dont la viscosité est peu dépendante de la nature de l'huile émulsionnée ; et ce pour une très grande diversité d'huiles, sans qu'il soit nécessaire d'ajuster dans chaque cas le rapport entre la composition à base d'alkylpolyglycosides et d'alcools gras (émulsionnant principal) et l'émulsionnant secondaire.

Une huile végétale éthoxylée susceptible d'être utilisée dans le cadre de l'invention peut être, par exemple, une huile de maïs éthoxylée, une huile de noyaux d'abricots éthoxylée, une huile de tournesol éthoxylée, une huile de colza éthoxylée, une huile de jojoba éthoxylée, une huile de pépins de raisins éthoxylée, une huile de lin éthoxylée.

Un ester méthylique d'huile végétale éthoxylé peut être, par exemple, un ester méthylique d'huile de maïs éthoxylé, un ester méthylique d'huile de tournesol éthoxylé, un ester méthylique de colza éthoxylé, un ester méthylique de lin éthoxylé.

Il a par ailleurs été découvert, de façon tout à fait inattendue, que les compositions émulsionnantes de l'invention lorsqu'elles sont associées à un ou plusieurs alkylpolyglycosides de 8 à 12 atomes de carbone (formant un co-tensioactif) permettent la formulation d'émulsions fluides dont la viscosité est peu dépendante de la nature de l'huile émulsionnée, et ce pour une très grande diversité d'huiles, sans qu'il soit nécessaire d'ajuster dans chaque cas le rapport entre la composition à base d'alkylpolyglycosides et d'alcools gras et le co-tensioactif.

Ainsi, la présente invention couvre des émulsions comprenant en outre un co-tensioactif choisi parmi les alkylpolyglycosides ayant de 8 à 12 atomes de carbone, en une quantité telle que la quantité totale d'agent émulsionnant et d'agent co-tensioactif soit inférieure ou égale à 25% en poids, le rapport pondéral entre l'émulsionnant et le co-tensioactif précité étant compris entre 99:1 et 60:40.

Avantageusement, l'agent tensio-actif est un alkylpolyglycoside ayant 12 atomes de carbone.

Les émulsions obtenues dans le cadre de la présente invention (avec ou sans émulsionnants complémentaires) sont généralement stables au moins 24 h à température ambiante.

Il a également été constaté que la stabilité de ces émulsions peut être considérablement accrue par ajout, au sein de l'émulsion, de polymères synthétiques ou d'hydrocolloïdes naturels habituellement utilisés en cosmétique.

De tels agents susceptibles d'accroître la stabilité des émulsions seront généralement utilisés en une quantité d'environ 0,1 à 5 % en poids rapportée au poids de l'émulsion.

Les polymères et hydrocolloïdes susceptibles d'être utilisés pour stabiliser les émulsions à base de compositions d'alkylpolyglycosides et d'alcools gras conformes à la présente invention peuvent être choisi, par exemple, parmi :
- les polymères et copolymères acryliques ou méthacryliques, réticulés ou non, comme le carbomer, les copolymères acrylates/stéareth-20 méthacrylate, les polymères réticulés acrylate/C₁₀₋₃₀ alkylacrylate, le glycérylpolyacrylate, le polyglycérylméthacrylate, le polyacrylate de sodium ;
- les polymères et copolymères issus du styrène ou du vinyle comme le sodium polystyrène sulfonate, ou un polymère réticulé PVM/MA (Polyvinyl Méthyl Ether/Maleic Anhydride) décadiéne ;
- les polymères et copolymères issus de l'acrylamide comme le produit connu sous la dénommination polyacrylamide/C₁₃₋₁₄ isoparaffin/Laureth-7 ;
- les gommes d'origine naturelle comme la gomme xanthane, la gomme sclérothium, les alginates, les carraghénates, les glucomannanes, la gomme de karaya ;
- les polymères cellulosiques et leurs dérivés comme la cellulose microcristalline, la carboxyméthylcellulose, la méthylcellulose, l'hydroxyéthyl-cellulose, l'hydroxypropylcellulose, l'hydroxypropylméthylcellulose ;
- les composés minéraux comme les bentonites, les smectites, les silicates de magnésium et/ou d'aluminium.

L'invention sera illustrée plus en détail par les exemples suivants, donnés uniquement à titre illustratif.

### EXEMPLE 1

### Procédé de préparation d'une composition à base d'alkylpolyglycosides et d'alcools gras selon l'invention

On introduit dans un réacteur polyvalent une coupe d'alcools gras sensiblement pure en C₁₄.

On introduit également dans le réacteur du glucose, de sorte que le rapport molaire entre l'alcool gras et le glucose soit de : 6/1.

On fait ensuite réagir le glucose avec l'alcool gras pendant 5 heures à une température comprise entre 100 et 105°C, en présence d'acide sulfurique en tant que catalyseur.

La réaction est réalisée sous un vide partiel de 15mm de mercure.

Après réaction, on neutralise le catalyseur au moyen d'une base.

La composition obtenue comprend :
75,5 % d'alcool gras libre en C₁₄, et
24,5 % d'alkylglycosides en C₁₄.

### EXEMPLES 2 A 7

On a préparé six autres compositions à base d'alkylpolyglycosides et d'alcools gras conformes à l'invention afin d'étudier notamment l'influence de la nature du mélange d'alkylpolyglycosides sur les propriétés obtenues.

Les compositions des exemples 2, 3, 4 et 6 ont été préparées en suivant le protocole expérimental décrit à l'exemple 1.

Les compositions en poids des coupes d'alcools gras utilisés comme matière de départ ont été mentionnées dans le tableau I ci-après.

La composition de l'exemple 5 a été obtenue en mélangeant à 80°C les compositions des exemples 1 et 3 dans des proportions respectives de 30 % et 70 % en poids.

La composition de l'exemple 7 a été obtenue en mélangeant à 80°C les compositions des exemples 1 et 2 dans des proportions respectives de 5 % et 95 % en poids.

Les compositions des mélanges d'alkylpolyglycosides et d'alcools gras ainsi obtenues ont été mentionnées dans le tableau II ci-après.

### EXEMPLES COMPARATIFS 1 A 3

Afin de mettre en évidence les propriétés particulières des compositions à base d'alkylpolyglycosides et d'alcools gras conformes à la présente invention, on a réalisé trois compositions à titre d'exemples comparatifs.

La composition de l'exemple comparatif 1 correspond à la composition décrite à l'exemple 1 du document WO 92/06778.

La composition de l'exemple comparatif 2 a été préparée en suivant le protocole expérimental décrit à l'exemple 1, la coupe d'alcools gras utilisés comme matière de départ présentant la composition mentionnée dans le tableau I ci-après.

La composition de l'exemple comparatif 3 correspond à la composition de l'exemple 1 du document WO 95/13863.

Les compositions des mélanges des exemples comparatifs 1 à 3 ont été regroupées au tableau II ci-après.

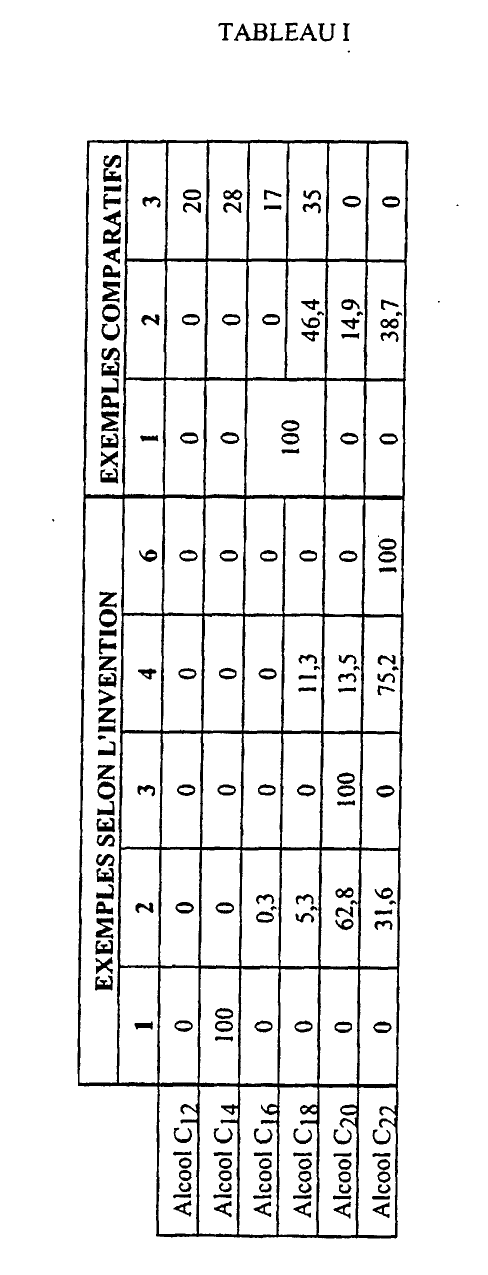

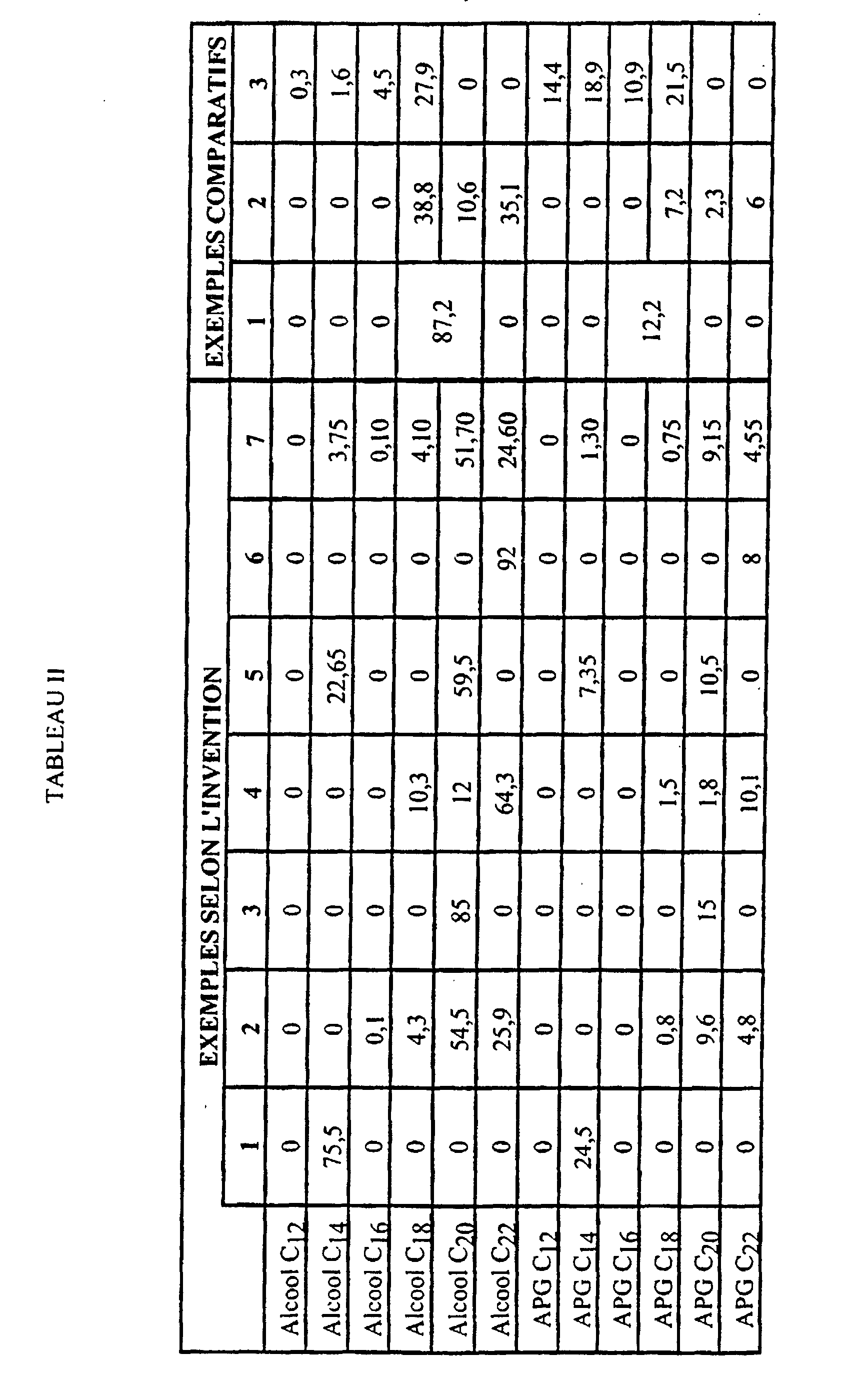

### EXEMPLE 8

### Procédé de préparation d'émulsions à partir d'une composition émulsionnante selon l'invention ou d'une composition émulsionnante selon l'état de la technique

On a préparé diverses émulsions au moyen des compositions des exemples 1 à 7 ainsi que des compositions des exemples de comparaison 1 à 3.

Ces émulsions ont été préparées de la façon suivante :

On porte un mélange constitué d'une composition émulsionnante, d'une phase huileuse et éventuellement d'un co-émulsionnant ou d'un co-tensioactif à une température supérieure au point de fusion de la composition d'alkylpolyglycosides, de manière à obtenir un mélange liquide.

La phase aqueuse ou un solvant polaire est chauffé à la même température.

Les deux phases (huileuse et aqueuse) sont ensuite homogénéisées au moyen d'un appareil Silverson par exemple pendant une durée de 3 à 6 min à 4 000 rpm.

Les émulsions sont ensuite refroidies jusqu'à température ambiante sous agitation lente type ancre.

### Mise en évidence des propriétés de texture des émulsions obtenues par la mise en oeuvre des compositions selon l'invention, par comparaison aux compositions de l'étai de la technique

### Etude No. 1

En suivant le protocole expérimental décrit à l'exemple 8, on a préparé diverses émulsions à partir des compositions selon l'invention décrites aux exemples 1 à 6 et à partir des compositions de l'état de la technique décrites aux exemples comparatifs 1 à 3.

Ces émulsions présentent les compositions suivantes :
- compositions émulsionnantes selon l'invention
   ou selon un exemple comparatif : 5 %,
- huile (cétéaryloctanoate) : 20 %,
- eau : 75 %.

Les propriétés des émulsions ainsi réalisées ont été évaluées par un panel de 6 personnes expérimentées. La texture des émulsions réalisées est évaluée par étalement sur le dos de la main d'une quantité d'émulsion d'environ 0,2 g. Dans cette première étude, les critères évalués ne sont pas différenciés mais estimés dans leur globalité par notation quantitative de la texture selon l'échelle de notation de 0 à 3 suivante :

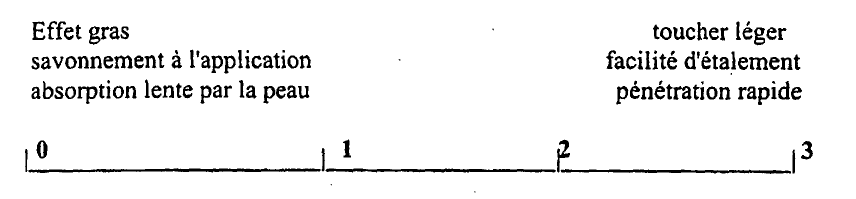

Les résultats obtenus sont regroupés au tableau III.

**TABLEAU III**

| **EMULSION** | **NOTATION** |
|---|---|
| exemple 1 | 1.9 |
| exemple 2 | 1.8 |
| exemple 3 | 2.0 |
| exemple 4 | 1.6 |
| exemple 5 | 2.2 |
| exemple 6 | 2.6 |
| exemple comparatif 1 | 0 |
| exemple comparatif 2 | 1.0 |
| exemple comparatif 3 | 0 |

Sachant que le coefficient de variation des réponses obtenues a été au maximum de 20 %, on différencie significativement les émulsions obtenues avec les compositions des exemples 1 à 6 (note ≥ 2.0) des émulsions obtenues avec les compositions des exemples comparatifs 1 à 3 (note ≤ 1.0).

### Etude No. 2

En suivant le protocole expérimental décrit à l'exemple 8, on a préparé diverses émulsions à partir des compositions selon l'invention décrites aux exemples 2 et 3 et à partir des compositions de l'état de la technique décrites à l'exemple comparatif 1.

Ces émulsions présentent les compositions suivantes :
- composition émulsionnante selon l'invention ou selon un exemple comparatif : 5 %,
- huile (isononyl isononanoate) : 20 %,
- eau : qsp 100%
- carbomer 940 qs*,
- trométamol qs pH=7.
* Du carbomer 940 est ajouté, si nécessaire, en une quantité telle que la viscosité BROOKFIELD LVT (mobile 4 - 6 rpm) des émulsions étudiées soit dans tous les cas similaires (à +/- 20 %) à la viscosité obtenue pour l'exemple comparatif 1.

Cette étude a été réalisée par un panel de 32 personnes expérimentées. Chaque volontaire du panel a coché, pour chaque émulsion étudiée, les descripteurs sensoriels qu'il jugeait les plus représentatifs de l'émulsion testée, parmi les suivants :
- savonnement,
- difficulté d'étalement,
- douceur,
- soyeux,
- richesse,
- évanescence.

Un profil de texture de chacune des émulsions peut être déterminé à partir de la fréquence d'utilisation des descripteurs. Les émulsions obtenues avec les compositions des exemples 2 et 3 se différencient significativement de l'émulsion obtenue avec la composition de l'exemple comparatif 1, comme le montre le tableau IV ci-après.

**TABLEAU IV**

| Fréquence de réponses | Exemple comparatif 1 | Exemple 3 | Exemple 2 |
|---|---|---|---|
| savonnement | 4.4 | 3.1 | 1.3 |
| difficulté d'étalement | 7.5 | 3.8 | 3.1 |
| douceur | 7.2 | 5.0 | 5.0 |
| soyeux | 4.7 | 2.8 | 2.2 |
| richesse | 3.8 | 2.2 | 3.4 |
| évanescence | 2.5 | 5.6 | 6.3 |

Les émulsions obtenues à partir des compositions des exemples 2 et 3 sont moins savonneuses (c'est-à-dire meilleure absorption par la peau) plus évanescentes, plus faciles à étaler, et présentent moins de résidus (moins douces, moins soyeuses et moins riches).

### Etude No. 3

En suivant le protocole expérimental décrit à l'exemple 8, on a préparé diverses émulsions à partir des compositions selon l'invention décrites aux exemples 1 à 6 et à partir des compositions de l'état de la technique décrites aux exemples comparatifs 1 à 3.

Ces émulsions présentent les compositions suivantes :
- composition émulsionnante selon l'invention ou selon un exemple comparatif : 5 %,
- huile (caprylate caprate de coprah) : 20 %,
- eau : qsp 100 %,
- polyacrylamide/C13-14 isoparaffin/Laureth-7qs*.
* Ce polymère est ajouté, si nécessaire après émulsification, en une quantité suffisante pour que :
- la viscosité des émulsions corresponde à une valeur de 5 000 mPa.s (lue au BROOKFIELD LVT M3 6 rpm 24 h après fabrication de l'émulsion) ceci dans le but de faciliter la préhension de l'émulsion,
- la stabilité de l'émulsion est parfaite pendant la durée des essais.

Cette étude a été réalisée par un panel de 12 personnes expérimentées. Chaque descripteur, parmi les suivants, a été noté quantitativement de 0 à 10 pour chaque émulsion testée.
- fluidité
- fraîcheur
- rapidité d'absorption
- résidu
- gras
- savonnement
- richesse.

Les résultats obtenus sont reportés au tableau V ci-après.

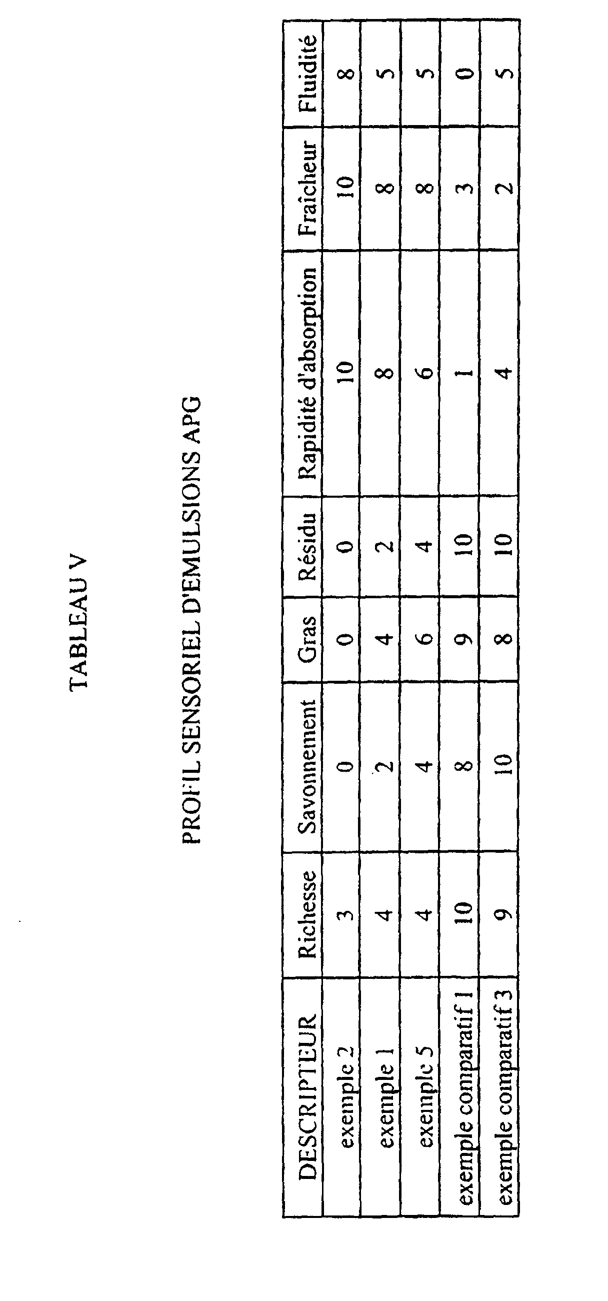

On constate, et de manière significative, que les émulsions obtenues à partir des compositions des exemples 1, 2 et 5 sont caractérisées par leur fluidité, leur fraicheur et leur rapidité d'absorption alors que les émulsions préparées à partir des compositions des exemples comparatifs 1 et 3 sont caractérisées par leur richesse, le savonnement à l'application, la sensation de gras et de résidus qu'elles laissent sur la peau.

### Exemples d'émulsions fluides susceptibles d'être obtenues à partir des compositions émulsionnantes selon l'invention et propriétés de ces émulsions fluides

Dans le cadre de la présente demande et des revendications, on entend par "émulsion fluide" une émulsion dont l'écoulement au travers d'une coupe d'écoulement ISO 2 431 de 6 mm commence moins de 5 s après l'enlèvement de l'obturateur (test selon la norme internationale ISO 2 431).

A titre d'émulsions fluides, on peut notamment citer les laits, en particulier les laits du type huile-dans-eau, à usage cosmétique ou hygiénique, comme des laits démaquillants, des laits corporels ou des laits solaires.

Les émulsions fluides sont également utilisées dans le domaine pharmaceutique ou vétérinaire.

L'étude suivante a permis de montrer que les compositions émulsionnantes à base d'alkylpolyglycosides et d'alcools gras conformes à l'invention forment très facilement des émulsions fluides et stables au moins une semaine à température ambiante, lorsqu'elles sont utilisées à titre d'émulsionnant principal, en association avec un co-émulsionnant choisi parmi une huile végétale éthoxylée ou un ester méthylique d'huile végétale éthoxylé.

L'originalité des compositions émulsionnantes conformes à l'invention, par rapport aux compositions émulsionnantes à base d'alkylpolyglycosides et d'alcools gras de l'état de la technique, réside dans le fait qu'elles permettent la formulation d'émulsions fluides et stables dont la viscosité est peu dépendante de la nature de l'huile émulsionnée.

En outre, il est possible d'utiliser un rapport unique entre émulsionnant principal (alkylpolyglycoside et alcool gras) et émulsionnant secondaire ou co-émulsionnant (huile végétale éthoxylée ou ester méthylique d'huile végétale éthoxylé) pour émulsionner une très grande diversité d'huiles.

### Etude No. 1

En suivant le protocole expérimental décrit à l'exemple 8, on a préparé diverses émulsions à partir d'une composition selon l'invention et d'un co-émulsionnant constitué d'une huile de noyaux d'abricots éthoxylée à 40 moles.

Ces émulsions présentent les compositions suivantes :
- composition émulsionnante selon l'invention : 2,7 %
- co-émulsionnant (huile de noyaux d'abricots éthoxylée à 40 moles) : 0,3 %
- huile : 10 %
- eau : 87 %.

On a ainsi obtenu des émulsions fluides et stables au moins une semaine à température ambiante en utilisant diverses compositions émulsionnantes selon l'invention et les huiles suivantes : cétéaryloctanoate, huile d'amandes douces, isododécane, isononylisononanoate, triheptanoïn, caprylate caprate de coprah, diisopropyl dimer dilinoleate, caprylate caprate de glycérol, squalane, diméthicone, huile de jojoba, huile de carthame.

En outre, il a été observé que, pour un même rapport entre émulsionnant principal et co-émulsionnant, il était possible d'obtenir des émulsions fluides pour cette large variété d'huiles, dont la viscosité est peu dépendante de la nature de l'huile et toujours inférieure à 10 000 mPa.s, comme le montre le tableau VI ci-après.

**TABLEAU VI**

| Huile | Viscosité BROOKFIELD DV mobile 3 ou 4 6 rpm mesurée à température ambiante 24 h après fabrication de l'émulsion |
|---|---|
| cétéaryloctanoate | 4 000 mPa.s |
| huile d'amandes douces | 3 000 mPa.s |
| isododécane | 5 700 mPa.s |
| isononylisononanoate | 2 500 mPa.s |
| triheptanoïn | 4 700 mPa.s |
| caprylate caprate de coprah | 4 300 mPa.s |
| diisopropyl dimer dilinoléate | 4 900 mPa.s |
| caprylate caprate de glycérol | 3 300 mPa.s |
| squalane | 4 600mPa.s |
| diméthicone | 1 700 mPa.s |
| huile de jojoba | 3 800 mPa.s |
| huile de carthame | 2 800 mPa.s |

Des émulsions préparées à partir des compositions émulsionnantes des exemples comparatifs 1 et 3 et d'un co-émulsionnant constitué d'une huile de noyaux d'abricots éthoxylée (40 moles) ou d'huile de maïs éthoxylée (40 moles) dans les mêmes proportions relatives que celles des émulsions préparées précédemment se sont avérées fluides mais instables pour les huiles testées précédemment.

### Utilisation des compositions à base d'alkylpolyglycosides et d'alcools gras selon l'invention pour la formulation d'émulsions à usage cosmétique, pharmaceutique ou vétérinaire, en association avec des systèmes émulsionnants traditionnels.

Les études qui ont été réalisées ont montré que les compositions à base d'alkylpolyglycosides et d'alcools gras conformes à la présente invention potentialisent les propriétés émulsionnantes des systèmes émulsionnants traditionnels et permettent d'obtenir des émulsions présentant des propriétés de texture et des caractéristiques sensorielles améliorées.

### Etude No. 1

En suivant le protocole expérimental décrit à l'exemple 8, on a préparé diverses émulsions à partir des compositions selon l'invention décrites aux exemples 1 et 2 et d'un co-émulsionnant constitué d'un système traditionnel PEG-100 stéarate/glycérylstéarate.

Trois types de formulation (respectivement désignés I, II, III) ont été étudiés pour trois types d'huiles (huile de paraffine, cétéaryloctanoate, C₈-C₁₀ triglycérides).

Le Tableau VII ci-après donne les compositions des formulations étudiées.

La stabilité des émulsions ainsi préparées a été mesurée et les résultats obtenus ont été regroupés au Tableau VIII.

Comme on peut le voir à la lecture de ce Tableau, l'utilisation d'une composition émulsionnante selon l'exemple 1 permet de stabiliser l'émulsion obtenue pour chacun des trois types d'huiles étudiés.

**TABLEAU VII**

| **FORMULATION** | **I** | **II** | **III** |
|---|---|---|---|
| Co-émulsionnant (PEG-100 Stéarate/ Glycéryl stéarate) | 3% | 3% | 5% |
| Emulsionnant de l'invention (exemple 1) | - | 2% | - |
| Huile | 10% | 10% | 10% |
| Eau | qsp 100% | qsp 100% | qsp 100% |

**TABLEAU VIII**

| **Huile** | **Huile de paraffine** | **Cétéaryloctanoate** | **C**_{**8**}**C**_{**10**} **Triglycéride** |
|---|---|---|---|
| I | instable à J1 | instable à J1 | instable à J1 |
| II | stable après 1 mois | stable après 1 mois | stable après 1 mois |
| III | instable à J1 | instable à J1 | instable à J1 |

### Etude n° 2

Une étude semblable à la précédente a été réalisée en remplaçant dans l'émulsion la composition émulsionnante de l'exemple 1 par une composition émulsionnante conforme à l'exemple 2.

Les compositions des formulations étudiées sont mentionnées au tableau IX, les résultats des études de stabilité étant mentionnés au tableau X.

**TABLEAU IX**

| **FORMULATION** | **I** | **II** | **III** | **IV** |
|---|---|---|---|---|
| Co-émulsionnant PEG-100 Stéarate/ Glycéryl stéarate | 3% | 2% | 3% | 5% |
| Emulsionnant de l'invention (exemple 2) | - | 3% | 2% | - |
| Huile | 10% | 10% | 10% | 20% |
| Eau | qsp 100% | qsp 100% | qsp 100% | qsp 100% |

**TABLEAU X**

| **Huiles** | **I** | **II** | **III** | **IV** |
|---|---|---|---|---|
| Huile de paraffine | instable à J1 | stable après 3 mois | stable après 3 mois | instable à J1 |
| Cétéaryloctanoate | instable à J1 | stable après 3 mois | stable après 3 mois | instable à J1 |
| Huile d'amandes douces | instable à J1 | stable après 3 mois | stable après 3 mois | instable à J1 |
| Diméthicone | instable à J1 | stable après 3 mois | stable après 3 mois | instable à J1 |
| C8-C10 Triglycéride | instable à J1 | stable après 3 mois | stable après 3 mois | instable à J1 |

### Etude No. 3

Dans cette étude, semblable à l'étude No. 1, on a utilisé un système émulsionnant constitué d'une composition conforme à l'invention selon l'exemple 1 et un système co-émulsionnant constitué de sorbitan stéarate et de polysorbate 60.

Les compositions des formulations étudiées sont mentionnées au tableau XI, les résultats des études de stabilité étant mentionnés au tableau XII.

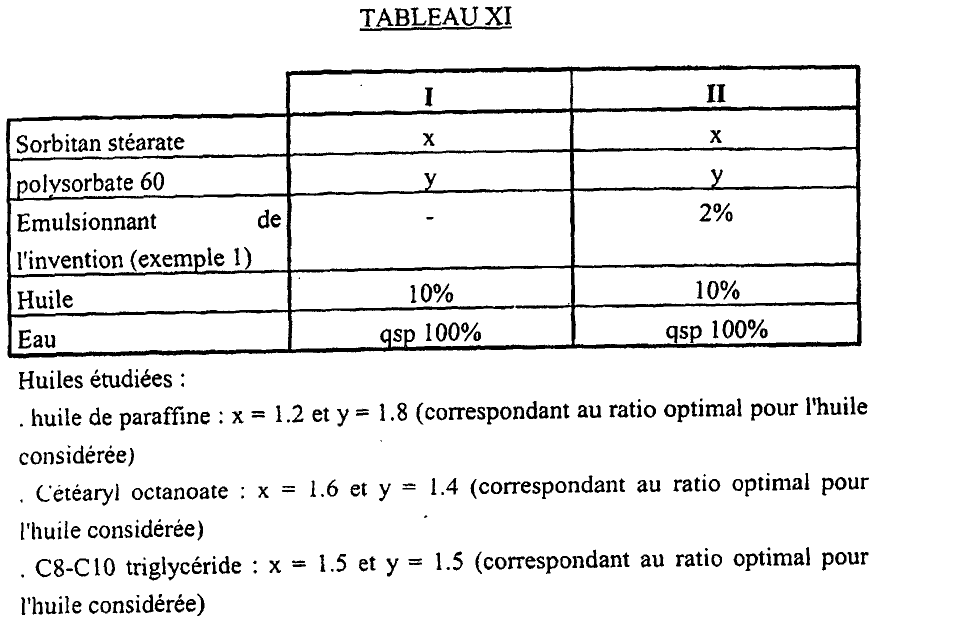

**TABLEAU XII**

| **HUILES** | **I** | **II** |
|---|---|---|
| Huile de paraffine | déphase à 1 mois formule fluide aucune texture | stable après 3 mois texture légère, soyeuse et évanescente |
| Cétéaryl octanoate | déphase à 7 jours formule fluide aucune texture | stable après 3 mois texture légère, soyeuse et évanescente |
| C8-C10 triglycéride | déphase à 1 jour formule fluide aucune texture | stable après 3 mois texture légère, soyeuse et évanescente |

### Exemple d'émulsions fluides susceptibles d'être obtenues à partir des compositions à base d'alkylpolyglycosides et d'alcools gras selon l'invention et d'un ou plusieurs alkylpolyglycosides ayant 8 à 12 atomes de carbone.

### Etude n°.1

En suivant le protocole expérimental décrit à l'exemple 8, on a préparé trois émulsions à partir de la composition décrite dans l'exemple 7, et d'un APG ayant 12 atomes de carbone comme co-tensioactif.

Ces émulsions présentent les compositions suivantes :
Composition émulsionnante selon l'exemple 7 2,7 %
Co-tensioactif (APG C12) 0,3 %
Huile 10 %
Polymère (polyacrylamide/C13-C14 isoparaffin/laureth-7) 0,5 %
Eau qsp 100 %

On a ainsi obtenu des émulsions fluides et stables au moins I semaine à température ambiante en utilisant les diverses huiles suivantes :
- Cétéaryloctanoate
- C8-C10 triglycéride
- Huile de paraffine

## Revendications

1. Compositions à base d'alkylpolyglycosides et d'alcools gras, **caractérisées en ce qu'**elles comprennent :
* 5 à 60 % en poids d'un mélange d'alkylpolyglycosides constitué pour au moins 90% en poids de :
- 0 à 15 % en poids d'au moins un alkylpolyglycoside de formule (I) :
R₁O(G₁)_{x₁} (I)
dans laquelle R₁ est un radical aliphatique, linéaire ou ramifié, ayant 16 ou 18 atomes de carbone, G₁ est un reste d'un saccharide, et x₁ est compris entre 1 et 5 ;
- 0 à 100 % en poids d'un alkylpolyglycoside de formule (II):
R₂O(G₂)_{x₂} (II)
dans laquelle R₂ est un radical aliphatique, linéaire ou ramifié, ayant 14 atomes de carbone, G₂ est le reste d'un saccharide, x₂ est compris entre 1 et 5 ;
- 0 à 100 % en poids d'au moins un alkylpolyglycoside de formule (III) :
R₃O(G₃)_{x₃} (III)
dans laquelle R₃ est un radical aliphatique, linéaire ou ramifié, ayant 20 ou 22 atomes de carbone, G₃ est le reste d'un saccharide, x₃ est compris entre 1 et 5 ; et
* 95 à 40 % en poids d'un ou plusieurs alcools de formule R'OH, dans laquelle R' est un radical aliphatique, linéaire ou ramifié, ayant de 14 à 22 atomes de carbone.

2. Compositions selon la revendication 1, **caractérisées en ce qu'**elles contiennent en tant qu'alcool(s) de formule R'OH précitée, un mélange constitué des alcools dont la partie alkyle est identique à la partie alkyle R₁, R₂ et R₃ des alkylpolyglycosides précités.

3. Compositions selon la revendication 2, **caractérisées en ce que** le mélange précité d'alcools est constitué de :
- 0 à 20 % en poids d'au moins un alcool ayant 16 à 18 atomes de carbone ;
- 0 à 100 % en poids d'au moins un alcool ayant 14 atomes de carbone ;
- 0 à 100 % en poids d'au moins un alcool ayant 20 à 22 atomes de carbone.

4. Compositions selon l'une des revendications 1 à 3, **caractérisées en ce que** le mélange précité d'alkylpolyglycosides est constitué pour au moins 90% en poids de :
- 0 à 15 % en poids d'au moins un alkylpolyglycoside de formule (I) tel que défini à la revendication 1 ;
- 0 à 40 % en poids d'un alkylpolyglycoside de formule (II) tel que défini à la revendication 1 ; et
- 50 à 100 % en poids d'au moins un alkylpolyglycoside de formule (III) tel que défini à la revendication 1.

5. Compositions selon l'une des revendications 1 à 3, **caractérisées en ce que** le mélange précité d'alkylpolyglycosides est constitué pour au moins 90% en poids de :
- 0 à 15 % en poids d'au moins un alkylpolyglycoside de formule (I) tel que défini à la revendication 1 ;
- 70 à 100 % en poids d'un alkylpolyglycoside de formule (II) tel que défini à la revendication 1 ; et
- 0 à 30 % en poids d'au moins un alkylpolyglycoside de formule (III) tel que défini à la revendication 1.

6. Compositions selon la revendication 5, **caractérisées en ce que** le mélange précité d'alkylpolyglycosides est constitué pour au moins 90% en poids de :
- 0 à 15 % en poids d'au moins un alkylpolyglycoside de formule (I) tel que défini à la revendication 1 ;
- 90 à 100 % en poids d'un alkylpolyglycoside de formule (II) tel que défini à la revendication 1 ; et
- 0 à 10 % en poids d'au moins un alkylpolyglycoside de formule (III) tel que défini à la revendication 1.

7. Compositions selon l'une des revendications 1 à 6, **caractérisées en ce qu'**elles comprennent :
* 8 à 40 % en poids du mélange précité d'alkylpolyglycosides ; et
* 92 à 60 % en poids d'un ou plusieurs alcools précités.

8. Compositions selon la revendication 7, **caractérisées en ce qu'**elles comprennent :
* 8 à 30 % en poids du mélange précité d'alkylpolyglycosides ; et
* 92 à 70 % en poids d'un ou plusieurs alcools précités.

9. Compositions selon l'une des revendications 1 à 8, **caractérisées en ce qu'**elles comprennent :
* 10 à 30 % en poids d'un alkylpolyglycoside de formule (II) ; et
* 90 à 70 % en poids d'un alcool ayant 14 atomes de carbone.

10. Compositions selon l'une des revendications 1 à 8, **caractérisées en ce qu'**elles comprennent :
* 8 à 25 % en poids en poids, d'un mélange d'alkylpolyglycosides constitué pour au moins 90% en poids de :
- 0 à 15 % en poids d'au moins un alkylpolyglycoside de formule (I) telle que définie à la revendication 1,
- 0 à 25 % en poids d'un alkylpolyglycoside de formule (II) telle que définie à la revendication 1,
- 75 à 100% en poids d'au moins un alkylpolyglycoside de formule (III) telle que définie à la revendication 1,
* 92 à 75 % en poids d'un mélange constitué des alcools dont la partie alkyle est identique à la partie alkyle R₁, R₂ et R₃ des alkylpolyglycosides précités.

11. Compositions selon la revendication 10, **caractérisées en ce qu'**elles comprennent :
* 8 à 18 % en poids, du mélange d'alkylpolyglycosides précité,
* 92 à 85 % en poids du mélange d'alcools gras précité.

12. Compositions selon l'une des revendications 1 à 8, **caractérisées en ce qu'**elles comprennent :
* 10 à 20 % en poids d'un mélange d'alkylpolyglycosides constitué pour au moins 90% en poids de :
- 20 à 40 % en poids d'un alkylpolyglycoside de formule (II) telle que définie à la revendication 1,
- 60 à 80% en poids d'au moins un alkylpolyglycoside de formule (III) telle que définie à la revendication 1, de préférence un alkypolyglycoside ayant 20 atomes de carbone,
* - 80 à 90 % en poids d'un mélange constitué des alcools dont la partie alkyle est identique à la partie alkyle R₂ et R₃ des alkylpolyglycosides précités.

13. Compositions selon la revendication 12, **caractérisées en ce qu'**elles comprennent :
* 10 à 20 % en poids d'un mélange d'alkylpolyglycosides constitué pour au moins 90% en poids de :
- 30 % en poids d'un alkylpolyglycoside de formule (II) telle que définie à la revendication 1,
- 70 % en poids d'au moins un alkylpolyglycoside de formule (III) telle que définie à la revendication 1, de préférence un alkypolyglycoside ayant 20 atomes de carbone,
* - 80 à 90 % en poids d'un mélange constitué des alcools dont la partie alkyle est identique à la partie alkyle R₂ et R₃ des alkylpolyglycosides précités.

14. Emulsions comprenant au moins une phase aqueuse et une phase huileuse et, à titre d'émulsionnant principal, une composition à base d'alkylpolyglycosides et d'alcools gras telle que définie selon l'une quelconque des revendications 1 à 13.

15. Emulsions selon la revendication 14, **caractérisées en ce qu'**elles comprennent de 1 à 25 % en poids de la composition émulsionnante précitée et jusqu'à 50 % en poids de la phase huileuse précitée.

16. Emulsions selon la revendication 15, **caractérisées en ce qu'**elles comprennent de 1 à 10 % en poids de la composition émulsionnante précitée et jusqu'à 50 % en poids de la phase huileuse précitée.

17. Emulsions selon l'une des revendications 14 à 16, **caractérisées en ce qu'**elles comprennent un agent émulsionnant complémentaire, en une quantité telle que la quantité totale d'agents émulsionnants au sein de la composition soit inférieure ou égale à 25 % en poids.

18. Emulsions selon la revendication 17, **caractérisées en ce que** l'agent émulsionnant complémentaire est un agent non ionique comme un alcool éthoxylé, un acide gras éthoxylé, un ester de glycérol, un ester de glycérol éthoxylé, un ester de sorbitan, un polysorbate, un ester de polyglycérol, un ester de saccharose, un ester d'alkylglucose, un ester d'alkylglucose éthoxylé, une diméthicone copolyol ou anionique comme un alkyl sulfate, un alkyl phosphate, un alcool éthoxylé phosphaté, un alcool éthoxylé sulfaté, un savon d'acide gras, un acylat, une diméthicone copolyol phosphate.

19. Emulsions selon l'une des revendications 14 à 18, **caractérisées en ce qu'**elles comprennent un co-émulsionnant choisi parmi les huiles végétales éthoxylées et les esters méthyliques d'huile végétale éthoxylés, en une quantité telle que la quantité totale d'agents émulsionnants au sein de l'émulsion est inférieure ou égale à 25 % en poids, le rapport pondéral entre l'émulsionnant principal constitué du mélange d'alkylpolyglycosides et d'alcools gras précité et le co-émulsionnant étant compris entre 98:2 et 20:80.

20. Emulsions selon la revendication 19, **caractérisées en ce que** le co-émulsionnant précité est une huile de maïs éthoxylée, une huile de noyaux d'abricots éthoxylée, une huile de tournesol éthoxylée, une huile de colza éthoxylée, une huile de jojoba éthoxylée, une huile de pépins de raisins éthoxylée, une huile de lin éthoxylée ou un ester méthylique d'huile de maïs éthoxylé, un ester méthylique d'huile de colza éthoxylé, un ester méthylique d'huile de lin éthoxylé.

21. Emulsions selon l'une des revendications 14 à 16, **caractérisées en ce qu'**elles comprennent en outre un co-tensioactif choisi parmi les alkylpolyglycosides ayant de 8 à 12 atomes de carbone, en une quantité telle que la quantité totale d'agent émulsionnant et d'agent co-tensioactif soit inférieure ou égale à 25% en poids, le rapport pondéral entre l'émulsionnant et le co-tensioactif précité étant compris entre 99:1 et 60:40.

22. Emulsions selon la revendication 21, **caractérisées en ce que** l'agent co-tensioactif précité est un alkylpolyglycoside ayant 12 atomes de carbone.

23. Emulsions selon l'une quelconque des revendications 14 à 22, **caractérisées en ce qu'**elles comprennent, en outre, un polymère synthétique ou un hydrocolloïde naturel, en une quantité d'environ 0,1 à 5 % en poids.

24. Emulsions selon la revendication 23, **caractérisées en ce que** le polymère synthétique ou l'hydrocolloïde naturel précité est choisi parmi :
- les polymères et copolymères acryliques ou méthacryliques, réticulés ou non ;
- les polymères et copolymères du styrène ou du vinyle ;
- les polymères et copolymères de l'acrylamide ;
- les gommes d'origine naturelle ;
- les polymères cellulosiques et leurs dérivés ;
- les composés minéraux.

## Patentansprüche

1. Auf Alkylpolyglykosiden und Fettalkoholen basierende Zusammensetzungen, **dadurch gekennzeichnet, daß** sie:
* 5 bis 60 Gew.-% eines Alkylpolyglykosid-Gemischs, das zu mindestens 90 Gew.-% aus:
- 0 bis 15 Gew.-% mindestens eines Alkylpolyglykosids der Formel (I) :
R₁O(G₁)ₓ₁ (I)
worin R₁ für einen linearen oder verzweigten aliphatischen Rest mit 16 oder 18 Kohlenstoffatomen steht, G₁ für einen Saccharidrest steht und x₁ zwischen 1 und 5 liegt;
- 0 bis 100 Gew.-% eines Alkylpolyglykosids der Formel (II) :
R₂O(G₂)ₓ₂ (II)
worin R₂ für einen linearen oder verzweigten aliphatischen Rest mit 14 Kohlenstoffatomen steht, G₂ für einen Saccharidrest steht und x₂ zwischen 1 und 5 liegt;
- 0 bis 100 Gew.-% mindestens eines Alkylpolyglykosids der Formel (III) :
R₃O(G₃)ₓ₃ (III)
worin R₃ für einen linearen oder verzweigten aliphatischen Rest mit 20 oder 22 Kohlenstoffatomen steht, G₃ für einen Saccharidrest steht und x₃ zwischen 1 und 5 liegt;
besteht, und
* 95 bis 40 Gew.-% eines oder mehrerer Alkohole der Formel R'OH, worin R' für einen linearen oder verzweigten aliphatischen Rest mit 14 bis 22 Kohlenstoffatomen steht,
enthalten.

2. Zusammensetzungen nach Anspruch 1, **dadurch gekennzeichnet, daß** sie als Alkohol(e) der obigen Formel R'OH ein Gemisch aus Alkoholen, deren Alkylteil mit dem Alkylteil R₁, R₂ und R₃ der obigen Alkylpolyglykoside identisch ist, enthalten.

3. Zusammensetzungen nach Anspruch 2, **dadurch gekennzeichnet, daß** das obige Alkoholgemisch aus:
- 0 bis 20 Gew.-% mindestens eines Alkohols mit 16 bis 18 Kohlenstoffatomen,
- 0 bis 100 Gew.-% mindestens eines Alkohols mit 14 Kohlenstoffatomen und
- 0 bis 100 Gew.-% mindestens eines Alkohols mit 20 bis 22 Kohlenstoffatomen
besteht.

4. Zusammensetzungen nach einem der Ansprüche 1 bis 3, **dadurch gekennzeichnet, daß** das obige Alkylpolyglykosid-Gemisch zu mindestens 90 Gew.-% aus:
- 0 bis 15 Gew.-% mindestens eines Alkylpolyglykosids der Formel (I) gemäß Anspruch 1,
- 0 bis 40 Gew.-% eines Alkylpolyglykosids der Formel (II) gemäß Anspruch 1 und
- 50 bis 100 Gew.-% mindestens eines Alkylpolyglykosids der Formel (III) gemäß Anspruch 1
besteht.

5. Zusammensetzungen nach einem der Ansprüche 1 bis 3, **dadurch gekennzeichnet, daß** das obige Alkylpolyglykosid-Gemisch zu mindestens 90 Gew.-% aus:
- 0 bis 15 Gew.-% mindestens eines Alkylpolyglykosids der Formel (I) gemäß Anspruch 1,
- 70 bis 100 Gew.-% eines Alkylpolyglykosids der Formel (II) gemäß Anspruch 1 und
- 0 bis 30 Gew.-% mindestens eines Alkylpolyglykosids der Formel (III) gemäß Anspruch 1
besteht.

6. Zusammensetzungen nach Anspruch 5, **dadurch gekennzeichnet, daß** das obige Alkylpolyglykosid-Gemisch zu mindestens 90 Gew.-% aus:
- 0 bis 15 Gew.-% mindestens eines Alkylpolyglykosids der Formel (I) gemäß Anspruch 1,
- 90 bis 100 Gew.-% eines Alkylpolyglykosids der Formel (II) gemäß Anspruch 1 und
- 0 bis 10 Gew.-% mindestens eines Alkylpolyglykosids der Formel (III) gemäß Anspruch 1
besteht.

7. Zusammensetzungen nach einem der Ansprüche 1 bis 6, **dadurch gekennzeichnet, daß** sie:
* 8 bis 40 Gew.-% des obigen Alkylpolyglykosid-Gemischs und
* 92 bis 60 Gew.-% eines oder mehrerer der obigen Alkohole
enthalten.

8. Zusammensetzungen nach Anspruch 7, **dadurch gekennzeichnet, daß** sie:
* 8 bis 30 Gew.-% des obigen Alkylpolyglykosid-Gemischs und
* 92 bis 70 Gew.-% eines oder mehrerer der obigen Alkohole
enthalten.

9. Zusammensetzungen nach einem der Ansprüche 1 bis 8, **dadurch gekennzeichnet, daß** sie:
* 10 bis 30 Gew.-% eines Alkylpolyglykosids der Formel (II) und
* 90 bis 70 Gew.-% eines Alkohols mit 14 Kohlenstoffatomen
enthalten.

10. Zusammensetzungen nach einem der Ansprüche 1 bis 8, **dadurch gekennzeichnet, daß** sie:
* 8 bis 25 Gew.-% eines Alkylpolyglykosid-Gemischs, das zu mindestens 90 Gew.-% aus:
- 0 bis 15 Gew.-% mindestens eines Alkylpolyglykosids der Formel (I) gemäß Anspruch 1,
- 0 bis 25 Gew.-% eines Alkylpolyglykosids der Formel (II) gemäß Anspruch 1 und
- 75 bis 100 Gew.-% mindestens eines Alkylpolyglykosids der Formel (III) gemäß Anspruch 1
besteht, und
* 92 bis 75 Gew.-% eines Gemischs aus Alkoholen, deren Alkylteil mit dem Alkylteil R₁, R₂ und R₃ der obigen Alkylpolyglykoside identisch ist,
enthalten.

11. Zusammensetzungen nach Anspruch 10, **dadurch gekennzeichnet, daß** sie:
* 8 bis 18 Gew.-% des obigen Alkylpolyglykosid-Gemischs und
* 92 bis 85 Gew.-% des obigen Fettalkoholgemischs enthalten.

12. Zusammensetzungen nach einem der Ansprüche 1 bis 8, **dadurch gekennzeichnet, daß** sie:
* 10 bis 20 Gew.-% eines Alkylpolyglykosid-Gemischs, das zu mindestens 90 Gew.-% aus:
- 20 bis 40 Gew.-% eines Alkylpolyglykosids der Formel (II) gemäß Anspruch 1 und
- 60 bis 80 Gew.-% mindestens eines Alkylpolyglykosids der Formel (III) gemäß Anspruch 1, vorzugsweise ein Alkylpolyglykosid mit 20 Kohlenstoffatomen,
besteht, und
* 80 bis 90 Gew.-% eines Gemischs aus Alkoholen, deren Alkylteil mit dem Alkylteil R₂ und R₃ der obigen Alkylpolyglykoside identisch ist,
enthalten.

13. Zusammensetzungen nach Anspruch 12, **dadurch gekennzeichnet, daß** sie:
* 10 bis 20 Gew.-% eines Alkylpolyglykosid-Gemischs, das zu mindestens 90 Gew.-% aus:
- 30 Gew.-% eines Alkylpolyglykosids der Formel (II) gemäß Anspruch 1 und
- 70 Gew.-% mindestens eines Alkylpolyglykosids der Formel (III) gemäß Anspruch 1, vorzugsweise ein Alkylpolyglykosid mit 20 Kohlenstoffatomen,
besteht, und
* 80 bis 90 Gew.-% eines Gemischs aus Alkoholen, deren Alkylteil mit dem Alkylteil R₂ und R₃ der obigen Alkylpolyglykoside identisch ist,
enthalten.

14. Emulsionen, enthaltend mindestens eine Wasserphase und eine Ölphase und als Hauptemulgator eine auf Alkylpolyglykosiden und Fettalkoholen basierende Zusammensetzung nach einem der Ansprüche 1 bis 13.

15. Emulsionen nach Anspruch 14, **dadurch gekennzeichnet, daß** sie 1 bis 25 Gew.-% der obigen Emulgatorzusammensetzung und bis zu 50 Gew.-% der obigen Ölphase enthalten.

16. Emulsionen nach Anspruch 15, **dadurch gekennzeichnet, daß** sie 1 bis 10 Gew.-% der obigen Emulgatorzusammensetzung und bis zu 50 Gew.-% der obigen Ölphase enthalten.

17. Emulsionen nach einem der Ansprüche 14 bis 16, **dadurch gekennzeichnet, daß** sie einen Coemulgator in einer solchen Menge enthalten, daß die Gesamtmenge an Emulgatoren in der Zusammensetzung kleiner gleich 25 Gew.-% ist.

18. Emulsionen nach Anspruch 17, **dadurch gekennzeichnet, daß** es sich bei dem Coemulgator um ein nichtionisches Tensid wie einen ethoxylierten Alkohol, eine ethoxylierte Fettsäure, einen Glycerinester, einen ethoxylierten Glycerinester, einen Sorbitanester, ein Polysorbat, einen Polyglycerinester, einen Saccharoseester, einen Alkylglucoseester, einen ethoxylierten Alkylglucoseester, ein Dimethiconcopolyol oder ein anionisches Tensid wie ein Alkylsulfat, ein Alkylphosphat, einen phosphatierten ethoxylierten Alkohol, einen sulfatierten ethoxylierten Alkohol, eine Fettsäureseife, ein Acylat, ein Dimethiconcopolyolphosphat handelt.

19. Emulsionen nach einem der Ansprüche 14 bis 18, **dadurch gekennzeichnet, daß** sie einen unter ethoxylierten Pflanzenölen und ethoxylierten Pflanzenölmethylestern ausgewählten Coemulgator in einer solchen Menge enthalten, daß die Gesamtmenge an Emulgatoren in der Emulsion kleiner gleich 25 Gew.-% ist, wobei das Gewichtsverhältnis zwischen dem obigen, aus dem Gemisch von Alkylpolyglykosiden und Fettalkoholen bestehenden Hauptemulgator und dem Coemulgator zwischen 98:2 und 20:80 liegt.

20. Emulsionen nach Anspruch 19, **dadurch gekennzeichnet, daß** es sich bei dem obigen Coemulgator um ein ethoxyliertes Maisöl, ein ethoxyliertes Aprikosenkernöl, ein ethoxyliertes Sonnenblumenöl, ein ethoxyliertes Rapsöl, ein ethoxyliertes Jojobaöl, ein ethoxyliertes Traubenkernöl, ein ethoxyliertes Leinöl, einen ethoxylierten Maisölmethylester, einen ethoxylierten Rapsölmethylester oder einen ethoxylierten Leinölmethylester handelt.

21. Emulsionen nach einem der Ansprüche 14 bis 16, **dadurch gekennzeichnet, daß** sie außerdem auch noch ein unter Alkylpolyglykosiden mit 8 bis 12 Kohlenstoffatomen ausgewähltes Cotensid in einer solchen Menge enthalten, daß die Gesamtmenge an Emulgator und Cotensid kleiner gleich 25 Gew.-% ist, wobei das Gewichtsverhältnis zwischen dem Emulgator und dem obigen Cotensid zwischen 99:1 und 60:40 liegt.

22. Emulsionen nach Anspruch 21, **dadurch gekennzeichnet, daß** es sich bei dem obigen Cotensid um ein Alkylpolyglykosid mit 12 Kohlenstoffatomen handelt.

23. Emulsionen nach einem der Ansprüche 14 bis 22, **dadurch gekennzeichnet, daß** sie außerdem auch noch ein synthetisches Polymer oder ein natürliches Hydrokolloid in einer Menge von etwa 0,1 bis 5 Gew.-% enhalten.

24. Emulsionen nach Anspruch 23, **dadurch gekennzeichnet, daß** das obige synthetische Polymer oder natürliche Hydrokolloid ausgewählt ist unter:
- gegebenenfalls vernetzten Acryl- oder Methacrylpolymeren und -copolymeren,
- Styrol- oder Vinylpolymeren und -copolymeren,
- Acrylamidpolymeren und -copolymeren,
- Gummen natürlichen Ursprungs,
- Cellulosepolymeren und deren Derivaten und
- anorganischen Verbindungen.

## Claims

1. Compositions based on alkyl polyglycosides and fatty alcohols, **characterized in that** they comprise:
* 5 to 60% by weight of a mixture of alkyl polyglycosides consisting of at least 90% by weight of:
- 0 to 15% by weight of at least one alkyl polyglycoside of formula (I) :
R₁O(G₁)ₓ₁ (I)
in which R₁ is a linear or branched aliphatic radical having 16 or 18 carbon atoms, G₁ is a saccharide residue and x₁ is between 1 and 5;
- 0 to 100% by weight of an alkyl polyglycoside of formula (II) :
R₂O(G₂)ₓ₂ (II)
in which R₂ is a linear or branched aliphatic radical having 14 carbon atoms, G₂ is a saccharide residue and x₂ is between 1 and 5;
- 0 to 100% by weight of at least one alkyl polyglycoside of formula (III) :
R₃O(G₃)ₓ₃ (III)
in which R₃ is a linear or branched aliphatic radical having 20 or 22 carbon atoms, G₃ is a saccharide residue and x₃ is between 1 and 5; and
* 95 to 40% by weight of one or more alcohols of formula R'OH in which R' is a linear or branched aliphatic radical having from 14 to 22 carbon atoms.

2. Compositions according to Claim 1, **characterized in that** they comprise as alcohol(s) of formula R'OH above a mixture composed of alcohols whose alkyl moiety is identical to the alkyl moiety R₁, R₂ and R₃ of the above alkyl polyglycosides.

3. Compositions according to Claim 2, **characterized in that** the above mixture of alcohols is composed of:
- 0 to 20% by weight of at least one alcohol having 16 to 18 carbon atoms;
- 0 to 100% by weight of at least one alcohol having 14 carbon atoms;
- 0 to 100% by weight of at least one alcohol having 20 to 22 carbon atoms.

4. Compositions according to one of Claims 1 to 3,
**characterized in that** the above mixture of alkyl polyglycosides is composed of at least 90% by weight of:
- 0 to 15% by weight of at least one alkyl polyglycoside of formula (I) as defined in Claim 1;
- 0 to 40% by weight of an alkyl polyglycoside of formula (II) as defined in Claim 1; and
- 50 to 100% by weight of at least one alkyl polyglycoside of formula (III) as defined in Claim 1.

5. Compositions according to one of Claims 1 to 3,
**characterized in that** the above mixture of alkyl polyglycosides is composed of at least 90% by weight of:
- 0 to 15% by weight of at least one alkyl polyglycoside of formula (I) as defined in Claim 1;
- 70 to 100% by weight of an alkyl polyglycoside of formula (II) as defined in Claim 1; and
- 0 to 30% by weight of at least one alkyl polyglycoside of formula (III) as defined in Claim 1.

6. Compositions according to Claim 5, **characterized in that** the above mixture of alkyl polyglycosides is composed of at least 90% by weight of:
- 0 to 15% by weight of at least one alkyl polyglycoside of formula (I) as defined in Claim 1;
- 90 to 100% by weight of an alkyl polyglycoside of formula (II) as defined in Claim 1; and
- 0 to 10% by weight of at least one alkyl polyglycoside of formula (III) as defined in Claim 1.

7. Compositions according to one of Claims 1 to 6,
**characterized in that** they comprise:
* 8 to 40% by weight of the above mixture of alkyl polyglycosides; and
* 92 to 60% by weight of one or more abovementioned alcohols.

8. Compositions according to Claim 7, **characterized in that** they comprise:
* 8 to 30% by weight of the above mixture of alkyl polyglycosides; and
* 92 to 70% by weight of one or more abovementioned alcohols.

9. Compositions according to one of Claims 1 to 8,
**characterized in that** they comprise:
* 10 to 30% by weight of an alkyl polyglycoside of formula (II); and
* 90 to 70% by weight of an alcohol having 14 carbon atoms.

10. Compositions according to one of Claims 1 to 8,
**characterized in that** they comprise:
* 8 to 25% by weight of a mixture of alkyl polyglycosides composed of at least 90% by weight of:
- 0 to 15% by weight of at least one alkyl polyglycoside of formula (I) as defined in Claim 1,
- 0 to 25% by weight of an alkyl polyglycoside of formula (II) as defined in Claim 1,
- 75 to 100% by weight of at least one alkyl polyglycoside of formula (III) as defined in Claim 1,
* 92 to 75% by weight of a mixture composed of alcohols whose alkyl moiety is identical to the alkyl moiety R₁, R₂ and R₃ of the above alkyl polyglycosides.

11. Compositions according to Claim 10, **characterized in that** they comprise:
* 8 to 18% by weight of the above mixture of alkyl polyglycosides,
* 92 to 85% by weight of the above mixture of fatty alcohols.

12. Compositions according to one of Claims 1 to 8,
**characterized in that** they comprise:
* 10 to 20% by weight of a mixture of alkyl polyglycosides composed of at least 90% by weight of:
- 20 to 40% by weight of an alkyl polyglycoside of formula (II) as defined in Claim 1,
- 60 to 80% by weight of at least one alkyl polyglycoside of formula (III) as defined in Claim 1, preferably an alkyl polyglycoside having 20 carbon atoms,
* 80 to 90% by weight of a mixture composed of alcohols whose alkyl moiety is identical to the alkyl moiety R₂ R₃ of the above alkyl polyglycosides.

13. Compositions according to Claim 12, **characterized in that** they comprise:
* 10 to 20% by weight of a mixture of alkyl polyglycosides composed of at least 90% by weight of:
- 30% by weight of an alkyl polyglycoside of formula (II) as defined in Claim 1,
- 70% by weight of at least one alkyl polyglycoside of formula (III) as defined in Claim 1,
preferably an alkyl polyglycoside having 20 carbon atoms,
* 80 to 90% by weight of a mixture composed of alcohols whose alkyl moiety is identical to the alkyl moiety R₂ and R₃ of the above alkyl polyglycosides.

14. Emulsions comprising at least one aqueous phase and one oily phase and, as principal emulsifier, a composition based on alkyl polyglycosides and alcohols as defined in accordance with any one of Claims 1 to 13.

15. Emulsions according to Claim 14, **characterized in that** they comprise from 1 to 25% by weight of the above emulsifying composition and up to 50% by weight of the above oily phase.

16. Emulsions according to Claim 15, **characterized in that** they comprise from 1 to 10% by weight of the above emulsifying composition and up to 50% by weight of the above oily phase.

17. Emulsions according to one of Claims 14 to 16, **characterized in that** they comprise an additional emulsifier in an amount such that the total amount of emulsifiers within the composition is less than or equal to 25% by weight.

18. Emulsions according to Claim 17, **characterized in that** the additional emulsifier is a nonionic agent such as an ethoxylated alcohol, an ethoxylated fatty acid, a glycerol ester, an ethoxylated glycerol ester, a sorbitan ester, a polysorbate, a polyglycerol ester, a sucrose ester, an alkyl glucose ester, an ethoxylated alkyl glucose ester, a dimethicone copolyol or an anionic agent such as an alkyl sulphate, an alkyl phosphate, a phosphated ethoxylated alcohol, a sulphated ethoxylated alcohol, a fatty acid soap, an acylate, a dimethicone copolyol phosphate.

19. Emulsions according to one of Claims 14 to 18, **characterized in that** they comprise a co-emulsifier selected from ethoxylated vegetable oils and ethoxylated vegetable oil methyl esters, in an amount such that the total amount of emulsifiers within the emulsion is less than or equal to 25% by weight, the weight ratio between the principal emulsifier composed of the above mixture of alkyl polyglycosides and fatty alcohols and the co-emulsifier being between 98:2 and 20:80.

20. Emulsions according to Claim 19, **characterized in that** the above co-emulsifier is an ethoxylated maize oil, an ethoxylated apricot kernel oil, an ethoxylated sunflower oil, an ethoxylated colza oil, an ethoxylated jojoba oil, an ethoxylated grapeseed oil, an ethoxylated linseed oil or an ethoxylated maize oil methyl ester, an ethoxylated colza oil methyl ester, an ethoxylated linseed oil methyl ester.

21. Emulsions according to one of Claims 14 to 16, **characterized in that** they further comprise a co-surfactant selected from alkyl polyglycosides having from 8 to 12 carbon atoms, in an amount such that the total amount of emulsifier and co-surfactant is less than or equal to 25% by weight, the weight ratio between the emulsifier and the above co-surfactant being between 99:1 and 60:40.

22. Emulsions according to Claim 21, **characterized in that** the above co-surfactant is an alkyl polyglycoside having 12 carbon atoms.

23. Emulsions according to any one of Claims 14 to 22, **characterized in that** they further comprise a synthetic polymer or a natural hydrocolloid in an amount of approximately 0.1 to 5% by weight.

24. Emulsions according to Claim 23, **characterized in that** the above synthetic polymer or natural hydrocolloid is selected from:
- crosslinked and non-crosslinked acrylic or methacrylic polymers and copolymers;
- styrene or vinyl polymers and copolymers;
- acrylamide polymers and copolymers;
- gums of natural origin;
- cellulosic polymers and their derivatives;
- mineral compounds.
